# DEMANDE DE BREVET EUROPEEN

(11) **EP 0 802 435 A1**
(43) Date de publication de la demande: **22.10.1997**
(21) Numéro de dépôt: 97460013.2
(22) Date de dépôt: 24.03.1997
(51) Int. Cl.: G02B 6/42

(54) **Appareillage pour recherche du couplage optimum entre un composant opto-électronique et une fibre optique monomode et pour leur assemblage dans un module**

(30) Priorité: 16.04.1996 FR 9604986
(71) Demandeur: FRANCE TELECOM, 75015 Paris (FR)
(72) Inventeur: Poudoulec, Alain, 22300 Lannion (FR); Potard, Robert, 29800 Landerneau (FR)
(74) Mandataire: Le Guen, Louis François

(57) **Abrégé**

Procédé de fabrication d'une estrope de périmètre C à partir d'un seul et même cordage de diamètre D1, comprenant une âme sur laquelle sont positionnés des torons, les extrémités dudit cordage constituant cette âme avec un point de pénétration de ces extrémités, caractérisé en ce qu'il comprend les étapes essentielles suivantes :
- détermination d'une partie médiane du cordage pour former l'âme centrale et de deux portions d'extrémité, sensiblement égale à ½ C, réservées de part et d'autre de la partie médiane,
- modification des diamètres relatifs de la partie médiane et des portions d'extrémité, pour conférer un diamètre D1 aux portions d'extrémités et un diamètre D2 à la partie médiane,
- toronnage de six torons autour d'un moule de diamètre D1, à partir d'un point dit de pénétration de l'estrope,
L'invention concerne aussi l'estrope à six torons obtenue par ce procédé.

## Description

La présente invention concerne un appareillage mis en oeuvre dans une méthode de recherche du couplage optimum entre un composant opto-électronique et au moins une fibre optique monomode, via éventuellement une optique intermédiaire, puis dans une méthode d'assemblage dans un module du composant opto-électronique et de la fibre. Elle concerne aussi des méthodes permettant de rendre solidaires certaines pièces de l'appareillage.

Le domaine technique concerné est celui des télécommunications par fibre optique utilisant des modules opto-électroniques basés sur l'emploi de composants actifs semi-conducteurs.

Dans le domaine des télécommunications, la fibre optique monomode est de plus en plus largement utilisée comme support de transmission dans les liaisons longues distances. Les systèmes optiques utilisent des modules opto-électroniques réalisant des fonctions d'émission, d'amplification et de détection. Ces modules opto-électroniques sont, pour la plupart, réalisés à partir de composants semi-conducteurs. Le couplage de ces composants actifs doit être optimisé soit pour injecter le maximum de puissance optique dans la fibre optique monomode, soit pour en recevoir le maximum de puissance optique. L'assemblage doit alors être figé en position, puis monté en module en utilisant des moyens qui garantissent la conservation de l'alignement à l'échelle submicronique.

Le couplage entre une fibre optique monomode et un composant opto-électronique soit qu'il émette une onde optique, comme une diode laser, un amplificateur optique à semi-conducteur SOA, soit qu'il la reçoive, comme un photodétecteur PIN, est très délicat et a déjà fait l'objet de nombreuses publications, parmi lesquelles l'article technique anglais "Microlenses, Coupling Light to Optical Fibers" par Huhey-Daw Wu et Franck S. Barnes paru dans IEEE Press, Progress in Lasers and Electro-Optics.

La désadaptation entre le mode gaussien circulaire de la fibre et elliptique du composant actif nécessite un positionnement très précis des divers éléments à coupler. A titre d'exemple, par rapport à la position optimale de couplage, un écart de 0,6 µm suivant l'axe OX (ou OY), perpendiculaire a l'axe optique OZ, peut entraîner une perte de 1 dB.

La technique d'assemblage doit permettre une fixation solide et fiable des divers éléments mécaniques et optiques, sans induire de déformations d'origine mécanique ou thermique risquant de dégrader les performances initiales du couplage. Puis, les divers éléments mécaniques et optiques ainsi assemblés sont à monter dans un boîtier.

Différentes platines de micro-positionnement commerciales sont actuellement proposées pour réaliser un couplage en mode automatique entre un composant opto-électronique ou un guide optique et une fibre optique monomode. Leur utilisation est en général limitée à la recherche dynamique du couplage optimum, elles ne sont pas a priori conçues pour réaliser l'assemblage de modules.

Des solutions plus industrielles existent, comme par exemple le robot de positionnement vendu sous la marque commerciale "DUKANE" pour réaliser des modules opto-électroniques. Ces moyens technologiques lourds représentent un investissement très important. Ils sont en général destinés à la production en série et utilisent des outillages dédiés à un type de montage donné, ce qui les rend peu évolutifs.

Parmi les différents procédés d'assemblage connus, la technique de soudure par points, réalisée à l'aide d'un laser de puissance Nd:YAG, est la plus répandue. A titre d'exemples, on pourra se reporter à l'article anglais "Material Processing with Nd-Lasers" par C.J. Nonhof dans Electrochemical Publications limited, et aux documents FR-A-2 661 005, FR-A-2 698 453 et FR-A-2 702 054.

Cependant l'utilisation de cette technique d'assemblage reste délicate et demande une bonne connaissance de la déformation élastique des pièces mécaniques à souder. On observe parfois, après soudure, une dégradation des performances initiales du couplage qu'il est alors nécessaire de rattraper par une technique complexe de martelage laser. Il arrive parfois que l'assemblage final soit sous contraintes, avec des performances susceptibles d'évoluer dans le temps après relaxation. Ce phénomène est peu perceptible si l'on se contente d'un taux de couplage réduit; par contre il peut être très pénalisant pour la fiabilité du montage, lorsque l'on cherche à maintenir la position optimale de couplage.

Il faut également noter les dangers potentiels liés à l'utilisation d'un laser de soudure de puissance, qui impose un environnement de travail très sévère. En effet, les lasers Nd:YAG utilisés sont classifiés en classe IV et leur fonctionnement en mode pulsé libère des puissances importantes, par exemple de quelques kW. Des précautions d'emploi draconiennes sont indispensables pour garantir la sécurité du personnel.

Un objet de la présente invention consiste à utiliser une méthode de recherche du couplage optimum en mode dynamique en utilisant un banc semi-automatique et, pour remédier aux inconvénients mentionnés ci-dessus, à prévoir, comme appareillage, un ensemble de moyens à adapter sur le banc pour réaliser le couplage, puis l'assemblage d'un composant opto-électronique et d'une fibre optique, via éventuellement une optique intermédiaire.

Suivant la présente invention, l'appareillage comprend:
- un banc de positionnement se composant d'une partie fixe et d'une partie mobile, la position de la partie mobile du banc étant réglable selon trois axes de coordonnées rectangulaires OX, OY, OZ par rapport à la partie fixe du banc, et
- un ensemble de moyens comprenant:
   - une équerre composée d'une base épaisse et d'un jambage, la base présentant en creux, juste derrière le jambage, un logement pour recevoir et loger une embase portant le semi-conducteur, le jambage présentant un orifice dont l'axe passe par le centre optique du semi-conducteur, la base étant montée sur la partie fixe du banc, et
   - un manchon cylindrique pourvu à une de ses extrémités d'une bride, l'axe du manchon correspondant sensiblement à celui de l'orifice dudit jambage et le diamètre interne du manchon étant inférieur à celui dudit orifice, le manchon étant enfilé sur l'optique intermédiaire reliée à la fibre optique et étant monté sur la partie mobile du banc avec sa bride tourné vers le jambage,
- l'équerre sur sa partie fixe et le manchon sur sa partie mobile étant alignés de manière que les axes de l'orifice du jambage et du manchon soient confondus, l'extrémité de l'optique intermédiaire passant librement dans l'orifice du jambage, l'optique intermédiaire étant positionnée de manière à obtenir le couplage optimum,
- l'équerre, le manchon et l'optique intermédiaire étant rendus solidaires.

Suivant la présente invention, l'appareillage comprend:
- un banc de positionnement se composant d'une partie fixe et d'une partie mobile, la position de la partie mobile du banc étant réglable selon trois axes de coordonnées rectangulaires OX, OY, OZ par rapport à la partie fixe du banc, et
- un ensemble de moyens comprenant:
   - une double-équerre composée d'une base épaisse et de deux jambages, la base présentant en creux, entre les jambages, un logement pour recevoir et loger une embase portant le semi-conducteur, chaque jambage présentant un orifice dont l'axe passe par le centre optique du semi-conducteur, la base étant montée sur la partie fixe du banc, et
   - deux manchons respectivement pourvus à une de leurs extrémités de brides, l'axe d'un manchon correspondant sensiblement à celui de l'orifice du jambage associé et le diamètre interne d'un manchon étant inférieur à celui d'un orifice, chaque manchon étant enfilé sur une optique intermédiaire reliée à une fibre optique et étant monté successivement sur la partie mobile du banc avec sa bride tournée vers le jambage associé,
- la double-équerre sur sa partie fixe et un manchon sur sa partie mobile étant alignés de manière que les axes de l'orifice du jambage et du manchon concernés soient confondus, l'extrémité d'une optique intermédiaire passant librement dans le premier orifice, ladite optique intermédiaire étant positionnée de manière à obtenir le couplage optimum, cette opération étant répétée avec l'autre optique intermédiaire,
- la double-équerre, les manchons et les optiques intermédiaires étant rendus solidaires.

Suivant une autre caractéristique, chaque manchon est percé d'un orifice traversant la partie supérieure de sa paroi cylindrique et comporte une rainure circulaire sur sa surface interne.

Suivant une autre caractéristique, la bride de chaque manchon comporte une face supérieure présentant un chanfrein et une face externe, côté équerre, dans laquelle sont creusées une ou des rainures communiquant avec le fond du chanfrein.

Suivant une autre caractéristique, durant le réglage du couplage, puis l'assemblage des moyens, la face externe de la bride de chaque manchon est appliquée contre la face externe du jambage de l'équerre, ou d'un jambage de la double-équerre par des doigts pousseurs logés dans la partie mobile du banc et soumis à l'action de ressorts tarés.

Suivant une autre caractéristique, après avoir réalisé le couplage optimum, l'optique intermédiaire est fixée dans chaque manchon par collage.

Suivant une autre caractéristique, la face externe de la bride de chaque manchon est fixée à la face externe du jambage de l'équerre, ou d'un jambage de la double-équerre par collage.

L'opération de collage qui est prévue suivant les deux caractéristiques précédentes représente un progrès sensible par rapport à la technique antérieure de soudure par points réalisée à l'aide d'un laser Nd:YAG mentionnée ci-dessus. Une opération de collage est simple, ne pose pas de problèmes de température et ne nécessite pas de précautions d'emploi pour garantir la sécurité du personnel.

Il faut encore noter que le procédé original de placage des pièces à assembler avec mise en position, permet de minimiser les épaisseurs de colle utilisées et garantit ainsi la fiabilité des montages.

Il faut noter que l'utilisation du banc et la conception des éléments mécaniques associés, formant l'ensemble des moyens dans l'appareillage, permettent de coupler et d'assembler indifféremment une tête d'émission laser ou de détection optique, ou un amplificateur optique.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:
la Fig. 1 est une vue schématique en perspective du banc de couplage,
la Fig. 2 est une vue éclatée schématique d'un ensemble de moyens prévus pour l'assemblage d'une tête d'émission (ou de réception),
la Fig. 3 est une vue schématique en coupe verticale du banc d'assemblage, portant l'ensemble de moyens de la Fig. 2,
la Fig. 4 est une vue schématique partielle en plan de l'assemblage de la Fig. 3,
la Fig. 5 est une vue en coupe verticale de la mise en boîtier d'une tête d'émission,
la Fig. 6 est une vue en plan de la mise en boîtier de la Fig. 5,
la Fig. 7 est une vue éclatée schématique d'un ensemble de moyens prévues pour l'assemblage d'un amplificateur optique, et
la Fig. 8 est une vue schématique en coupe verticale du banc d'assemblage, portant l'ensemble de moyens de la Fig. 7.

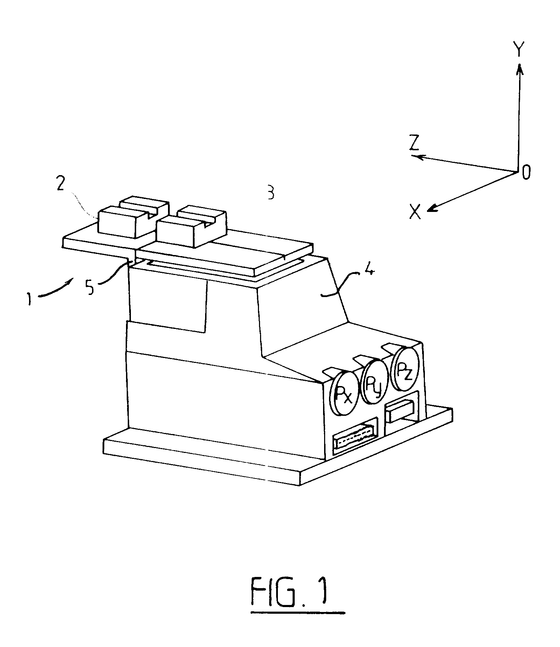

Le banc 1, montré en perspective à la Fig. 1, est constitué d'un berceau fixe 2 et d'un chariot mobile 3 qui sont respectivement fixés sur les parties supérieures d'une platine 4. Le berceau 2 est statique et est raccordé au châssis de la platine 4 par l'intermédiaire d'une équerre de fixation 5; sur le berceau 4, sont montées les pièces destinées à recevoir et loger le composant actif, y compris les circuits de régulation de température et d'alimentation électrique du composant actif, pendant qu'il est sur le banc 1. Le chariot mobile 3 est monté sur la plate-forme mobile de la platine 4; sur le chariot 3, sont montées les pièces destinées à recevoir l'optique de couplage qui prolonge la fibre optique. La platine 4 comporte aussi trois potentiomètres Px, Py et Pz qui permettent classiquement de faire exécuter, par rapport au berceau fixe 2, des mouvements limités du chariot mobile 3 selon trois axes rectangulaires OX, OY et OZ. Dans la réalité, on utilise pour faire exécuter des mouvements limités du chariot mobile une commande gérée par calculateur, les potentiomètres étant uniquement représentés pour mémoire.

Dans le présent exemple, la platine 4 correspond au modèle Light Line F-603.00 de PHYSIK INSTRUMENTE vendu en France par la société POLYTEC Pl/RMP; il s'agit d'une platine de micro-positionnement à trois axes de précision OX, OY et OZ. On pourra se reporter, à propos de cette platine, à l'article technique "Positionnement de fibres: un nouveau concept de motorisation" par G. Glöss, H. Parth et P. Cornardeau dans la revue Opto n° 73 de septembre-octobre 1983, et, plus particulièrement, à la description de la platine multi-axes intégrée lightline, page 41 de cet article. La platine 4 comporte des moteurs piézolinéaires du genre décrit dans le document EP-A-624 912 A1. Les dimensions réduites de cette platine ont permis notamment de développer un montage mécanique très compact.

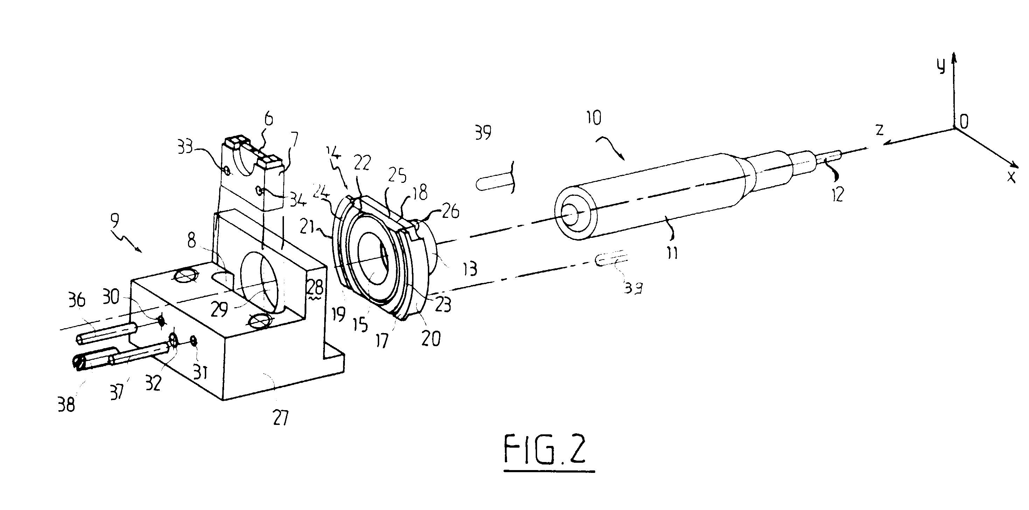

La vue éclatée de la Fig. 2 montre un composant actif 6 monté sur une embase 7, pratiquement en forme de parallélépipède, qui est destinée à être introduite dans un logement 8 d'un support d'embase 9. Le support d'embase 9 est monté, au moyen des cales adéquates non montrées, sur le berceau statique 2, lequel assure aussi la fonction de régulation en température (module à effet Peltier avec sonde thermistance CTN 10 Kilohms) et les alimentations électriques du composant actif requises.

La Fig. 2 montre également une optique intermédiaire ou optique de couplage 10, composée d'un coupleur de diode cylindrique 11 renfermant l'extrémité d'une fibre optique monomode 12, et un manchon 13. Le manchon 13 est pourvu à l'une de ses extrémités d'une bride 14 qui présente un trou cylindrique 15 correspondant à la paroi interne du manchon 13. Le manchon 13 et sa bride 14 sont prévus pour loger l'extrémité libre du coupleur de diode 11. Dans la vue éclatée de la Fig. 2, l'axe du coupleur de diode cylindrique 11 est représenté orienté suivant l'axe OZ d'un trièdre rectangulaire OXYZ et est confondu avec les axes du manchon 13 et du trou 15.

La face libre 17 de la bride 14, du côté opposé par rapport au reste du manchon 13, a une forme extérieure limitée par deux segments linéaires égaux 18 et 19, sensiblement horizontaux, raccordés par deux arcs de cercle 20 et 21. La face 17 comporte un ensemble de rainures en creux 22 à 24, la rainure 22 étant circulaire et les rainures 23 et 24 ayant la forme d'arcs de cercles limités par les segments linéaires 18 et 19.

La face supérieure de la bride 14, correspondant au segment supérieur 18, présente une surface biseautée 25, oblique vers le bas et vers la face libre 17, qui présente des parties en retrait donnant accès au fond des parties supérieures des rainures 22 à 24.

Le manchon 13 présente, comme on l'a dit ci-dessus, un cylindre interne de même diamètre que le trou 15. La paroi cylindrique du manchon 13 est percée d'un petit orifice 26, dont on verra le rôle ci-après.

Le support d'embase 9 a la forme générale d'une équerre formée d'une base épaisse 27 et d'un jambage 28. Le jambage 28 présente un trou 29, dans lequel vient se loger l'extrémité du coupleur de diode 11, d'un diamètre supérieur à celui du trou 15 de la bride 14, Immédiatement derrière le jambage 28, se trouve, foré verticalement dans la base 27, le logement 8 dont les dimensions internes correspondent aux dimensions externes de l'embase 7.

L'axe OZ, commun aux trous 29 et 15, correspond à l'axe d'émission maximum du composant actif 6, une fois que celui-ci est placé avec l'embase 7 dans le logement 8.

Parallèlement à l'axe OZ, la base 27 est percée de deux petits trous lisses 30 et 31, et d'un trou taraudé 32, ces trous traversant la base 27 de part en part. L'embase 7 comporte également deux petits trous 33 et 34. Quand l'embase 7 est placée dans le logement 8, les trous 30 et 33, d'une part, et 31 et 34, d'autre part, sont alignés au moyen de deux goupilles de précision 36 et 37, et l'embase 7 est plaquée sur la face de référence du logement 8 par la vis 38 vissée dans le trou 32. Par ailleurs, la base 27 présente des percements verticaux adéquats permettant de la fixer par vis sur le berceau fixe 2.

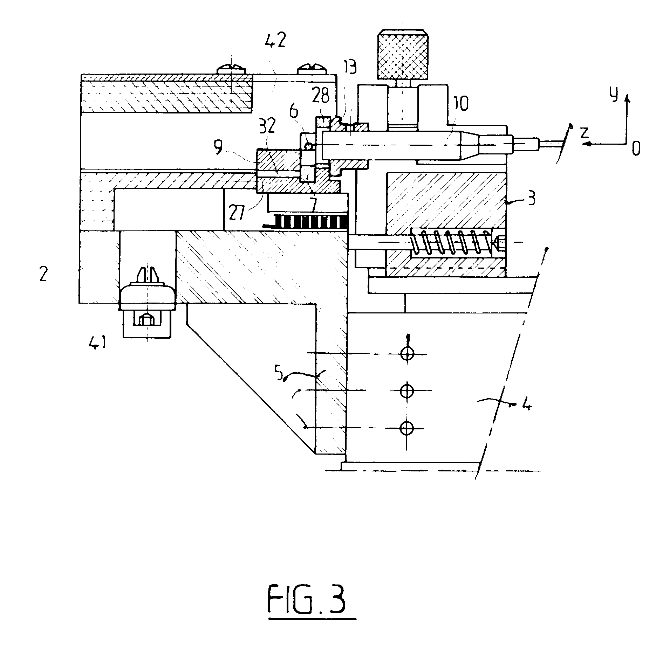

Sur la coupe de la Fig. 3, on retrouve, montée sur le berceau fixe 2 fixé par l'équerre de fixation 5 au châssis de la platine 4, la base épaisse 27 du support d'embase 9, avec le jambage 28. Dans la base 27, l'embase 7 portant le composant actif 6 est bloquée contre le jambage 28 par la vis 38 du trou 32.

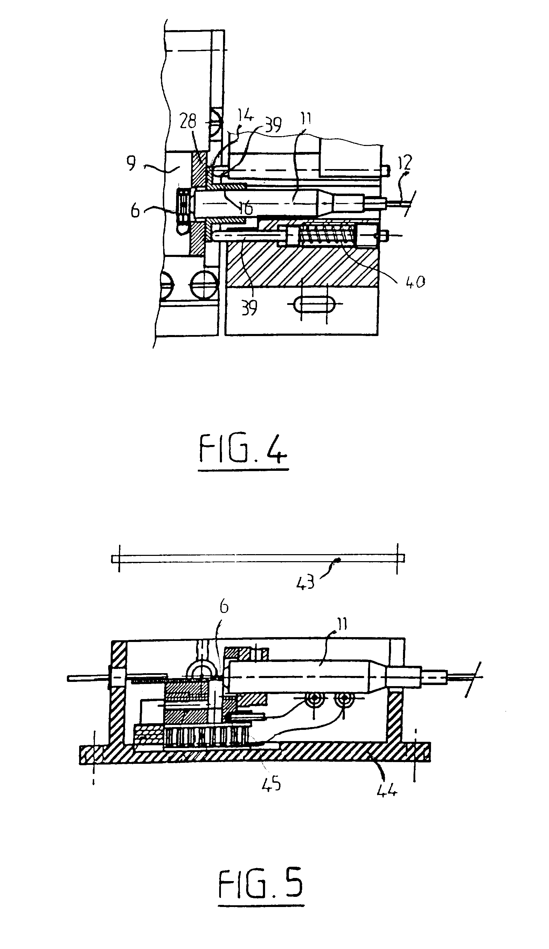

Sur la coupe de la Fig. 3, apparaît aussi l'optique de couplage 10, avec son extrémité dans le manchon 13 monté sur le chariot mobile 3. Le manchon 13 est, en permanence, plaqué contre le jambage 28 du support embase 9 (même pendant la phase de recherche du couplage maximum) par l'action de deux doigts pousseurs 39, que l'on a représentés symboliquement sur la vue éclatée de la Fig. 2. Les extrémités libres des doigts pousseurs 39, Fig. 4, sont appliquées contre la bride 14 du manchon 13, horizontalement de part et d'autre de l'axe OZ, tandis que les autres extrémités des doigts pousseurs 39 sont poussées par des ressorts de tarage 40; les doigts 39 et les ressorts 40 sont logés dans le chariot mobile 3.

Sur la vue de dessus de la Fig. 4, on voit bien comment les doigts pousseurs 39 agissent, poussés par les ressorts de tarage 40, sur la bride 14 du manchon 13.

Toutes les arrivées électriques sont regroupées sur une prise à neuf broches 41, Fig. 3, située sous l'équerre. Les contacts sur le composant actif 6 sont réalisés par l'intermédiaire d'un volet basculant 42, muni de linguets métalliques classiques venant en appui sur les zones d'alimentation électriques aménagées sur l'embase 7. Le volet basculant 42 et la bride de serrage effaçable permettent un montage et un démontage rapide des pièces à lier et liées.

La recherche de la position optimale de couplage est réalisée par le positionnement dynamique de l'optique de couplage 10, qui est solidaire du chariot mobile 3 de la platine 4.

Comme on l'a vu, l'optique de couplage 10, avec le coupleur de diode 11, est mise en regard du composant actif 6 monté au moyen de l'embase 8 sur le support d'embase 9, par l'intermédiaire du manchon 3.

Aprés l'opération de recherche de la position optimale de couplage réalisée au moyen du calculateur de commande, on réalise une phase de collage en deux étapes distinctes, décrites ci-après:
- une première opération consiste à déposer une goutte de colle calibrée dans l'orifice 26 prévu dans le manchon 13 qui supporte le coupleur de diode 10, afin de solidariser ces deux pièces et de figer la côte Z; sous l'orifice 26, une rainure circulaire interne de diffusion de la colle permet d'effectuer la liaison interne du manchon 13 avec l'optique de couplage 10; à ce stade, il faut noter que la diffusion par capillarité de la colle et les forces de rétreint exercées par le début de la polymérisation entraînent de manière systématique un déplacement radial des pièces mécaniques, faisant chuter le niveau d'intensité couplée. Après attente de la polymérisation complète, il est donc indispensable de rattraper la dérive de couplage en recherchant le maximum d'intensité par un balayage suivant les axes OX et OY au moyen des réglages du calculateur de commande,
- le collage du manchon 13 sur le support d'embase 9 est réalisé par diffusion de colle dans le plan de joint formé par ces deux pièces. Le dépôt de colle se fait dans le chanfrein 25 prévu au sommet du manchon, les rainures de diffusion 22 à 24 permettent à la colle de réaliser une bonne imprégnation des pièces mécaniques, par l'intermédiaire de la rugosité résiduelle d'usinage (r = 1,6 pm).

Comme on l'a déjà dit, pour minimiser les épaisseurs de colle, le manchon 13 est en permanence plaqué contre le support d'embase 9 par l'action des deux doigts pousseurs 39. La charge axiale développée par la platine (8,5 **N**) et le tarage des ressorts 40 sont compatibles pour garantir les performances initiales de la platine 4, à savoir une précision de positionnement de 0,1 µm.

En résumé, la réalisation d'un module macro-optoélectronique comprend trois phases distinctes : premièrement, le couplage, deuxièmement, l'assemblage des divers éléments par technique de collage (ces deux opérations sont réalisées sur le banc) et, troisièmement, après polymérisation de la colle, la mise en boîtier de l'ensemble que l'on va décrire maintenant.

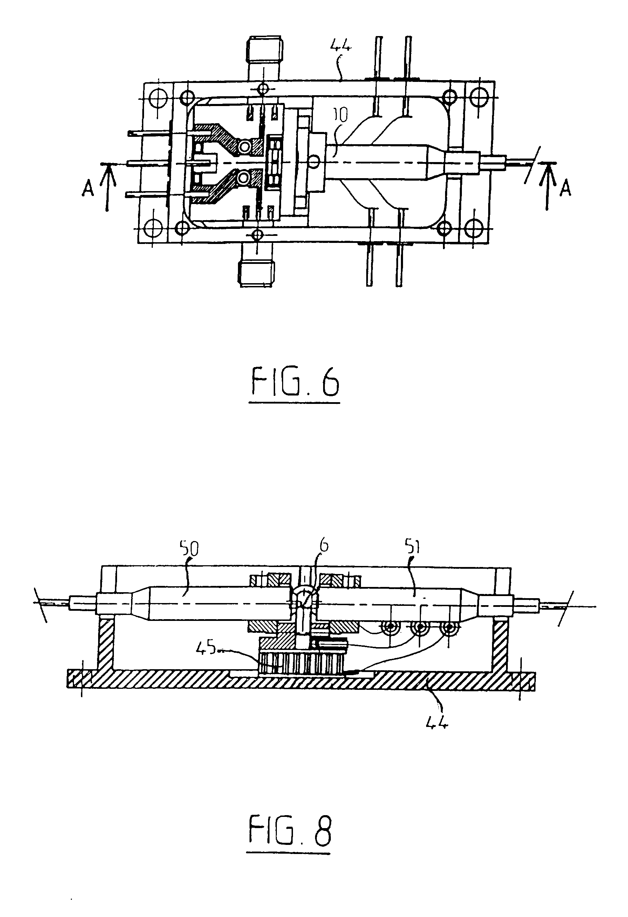

Après l'opération d'assemblage par collage, l'assemblage collé est placé dans un boîtier 44, tel que représenté aux Figs. 5 et 6. La coupe AA et la vue de dessus révèlent la disposition des divers éléments à l'intérieur du boîtier 44. Le montage repose sur un module 45 à effet Peltier de 10 x 15 mm situé sur le fond du boîtier. L'assemblage est maintenu en position par deux vis de fixation qui traversent le fond du boîtier qui sert de dissipateur thermique, les vis sont en prise avec le support d'embase 9.

Les contacts électriques avec l'extérieur sont réalisés par l'intermédiaire de sept traversées isolées et d'une ou deux prises coaxiales servant à l'arrivée du signal de modulation électrique. Ces divers éléments sont collés au boîtier par de l'époxy chargé à l'argent, la polymérisation de cette colle à température ambiante demande un délai de 18 à 24 heures.

Le montage complet intègre un double "Té" de polarisation réalisé sur une alumine d'épaisseur 0,635 mm qui est localisée sur le dessus du support d'embase, et collée à l'époxy argent.

Il est bien évident que la description qui précède a été faite en supposant explicitement que le composant optique 6 était un émetteur optique, tel qu'une diode laser, mais l'homme du métier comprendra que la réalisation d'une tête réceptrice pourra être faite, en utilisant les mêmes moyens, en prenant comme composant optique une diode photodétectrice.

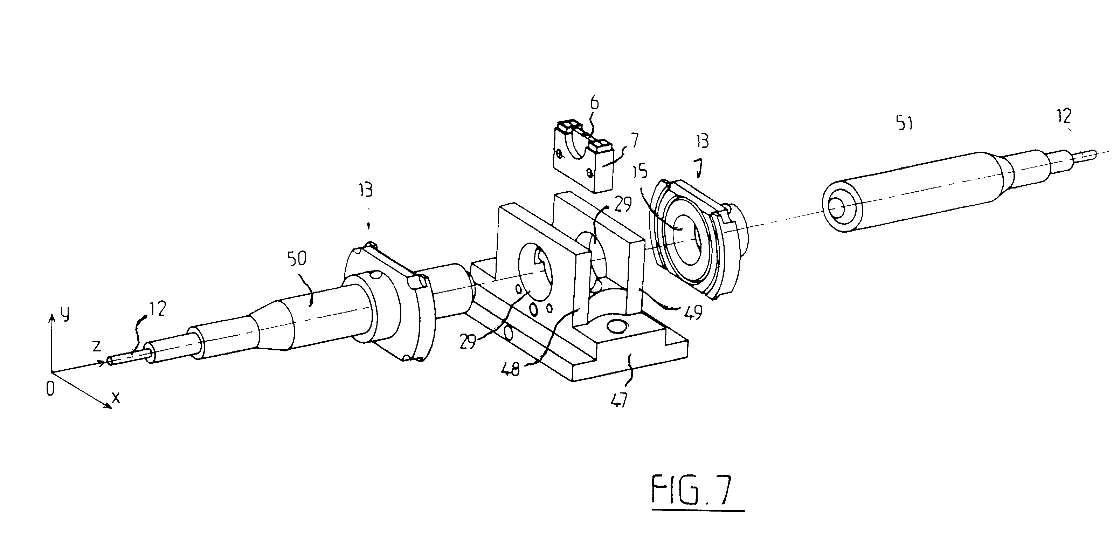

La vue éclatée de la Fig. 7 concerne l'ensemble des moyens utilisés pour réaliser un amplificateur optique. Le montage mécanique défini pour l'assemblage d'un amplificateur optique présente des analogies avec le montage précédemment décrit, comme le montre la vue éclatée de la Fig. 7.

La différence essentielle réside dans un support d'embase spécifique 46 qui permet un accès aux deux faces du composant actif 6. Pour standardiser les pièces mécaniques, ce montage utilise des manchons 13, identiques à celui de la Fig. 2, et il reprend la même technique de fixation de l'embase 7 sur son support (goupilles 36, 37, plus vis 38).

Le support d'embase 46 comprend une base épaisse 47 complétée par deux jambages parallèles 48 et 49, la partie de la base 47 qui se trouve entre les jambages 48 et 49 étant convenablement forée verticalement pour y former en creux un logement 8 pour recevoir l'embase 7 du composant actif 6. Le support d'embase 46 peut être considéré comme la combinaison de deux supports d'embase 9, Fig. 2, que l'on aurait placés face à face de manière que les trous 15 des jambages 48 et 49 puissent revevoir les extrémités de deux coupleurs de diode alignés 50 et 51 munis chacun de leurs manchon 13.

La réalisation d'un amplificateur optique est similaire à celle d'une tête optique. Après couplage et collage du premier manchon 13 sur le premier jambage 48, le montage est démonté du banc 1 et réinstallé sur le berceau statique 2 pour effectuer les mêmes opérations de l'autre côté du composant actif 6.

L'assemblage se termine par une mise en boîtier, comme le montre la Fig. 8, des divers éléments d'un amplificateur optique, dans le cas d'un couplage réalisé par des coupleurs de diode. Les différents éléments intégrés au boîtier (module à effet Peltier, traversées isolées et prise coaxiale) sont standard et identiques à ceux utilisés pour le montage d'une tête d'émission ou de réception. Six traversées isolées permettent d'alimenter le module Peltier, la thermistance et le composant actif (+ laser et - laser).

Le boîtier offre la possibilité d'ajouter une ou deux prises de modulation, qui sont raccordées au composant actif par une alumine classique.

En employant les moyens et méthodes décrits ci-dessus, on a réalisé des modules optoélectroniques présentant de faibles pertes d'assemblage, comme illustré ci-après dans le cas du montage d'une tête d'émission laser et d'un amplificateur optique.

On a réalisé le couplage et l'assemblage d'une tête d'émission, à partir d'un laser de type BH (Buried Heterostructure) et d'un coupleur de diode commercial ISOWAVE (référence : 1-15-PTMLC.7, distance frontale 700 µm, perte d'insertion - 3 dB). La puissance couplée de référence sans placage des pièces mécaniques était de 875 µW. Le tableau 1 joint ci-après présente la variation du niveau de la puissance de sortie du module, en fonction des différentes étapes d'assemblage.

La technique d'assemblage par collage ne dégrade pas les performances de couplage initiales, la perte finale est voisine de la perte d'insertion du coupleur de diode: la différence est inférieure à 0,5 dB. Il convient de remarquer que dans ce cas particulier, le montage dans le boîtier a amélioré les performances: ceci s'explique, d'une part, par les contraintes mécaniques exercées sur l'extrémité du coupleur de diode par la résine d'étanchéité fermant le boîtier et, d'autre part, par la déformation provoquée par un serrage optimisé des vis du couvercle.

La technique d'assemblage a également été validée par la réalisation d'un module amplificateur optique à semi-conducteur, les deux couplages sur les deux faces du composant ont été effectués par des coupleurs de diode ISOWAVE, présentant respectivement une perte d'insertion mesurée par le fabricant de 2,6 dB pour la face A et 2,3 dB pour la face B.

La puissance maximale couplée, mesurée sans placage et avant collage, était respectivement d'environ 650 µW pour la face A et d'environ 700 µW pour la face B. Pour les conditions expérimentales retenues (T = 20° C et 1 = 45 mA), la puissance d'émission spontanée était identique pour les deux faces du composant (1,7 mW), la différence de puissance couplée s'explique par la différence de performance des coupleurs de diode (delta = 0,3 dB).

Le tableau II, également joint ci-après, montre l'évolution de la puissance de sortie de chaque face en fonction des différentes étapes de réalisation.

Il convient de remarquer que comme dans le cas du montage de la tête d'émission laser une optimisation des performances de couplage a été possible par la mise en boîtier, en induisant des contraintes mécaniques sur l'assemblage.

La technique de collage permet d'obtenir des pertes d'assemblage très faibles, voisines des pertes intrinsèques de l'optique utilisée. L'emploi d'un adhésif instantané de faible viscosité permet une bonne imprégnation des pièces à assembler. La nature de la colle utilisée permet une mise en oeuvre aisée et un temps d'exécution de cette phase d'assemblage réduit, la polymérisation de la colle intervient après 15 mn. La procédure expérimentale utilisée conserve de manière reproductible les performances initiales du couplage, comme confirmé par un test de vieillissement effectué sur une tête d'émission, pendant plus de 6000 heures.

## Revendications

1. Appareillage comprenant:
- un banc de positionnement (1) se composant d'une partie fixe (2) et d'une partie mobile (3), la position de la partie mobile (3) du banc étant réglable selon trois axes de coordonnées rectangulaires OX, OY, OZ par rapport à la partie fixe (2) du banc, et
- un ensemble de moyens caractérisé en ce qu'il comprend:
- une équerre (9) composée d'une base épaisse (27) et d'un jambage (28), la base (27) présentant en creux, juste derrière le jambage (28), un logement (8) pour recevoir et loger une embase (7) portant le composant actif (6), le jambage (28) présentant un orifice (29) dont l'axe (OZ) passe par le centre optique du composant actif (diode) (6), la base (27) étant montée sur la partie fixe (2) du banc (1), et
- un manchon cylindrique (13) pourvu à une de ses extrémités d'une bride (14), l'axe du manchon (13) correspondant sensiblement à celui de l'orifice (29) dudit jambage (28) et le diamètre interne du manchon (13) étant supérieur à celui dudit orifice (29), le manchon (13) étant enfilé sur l'optique intermédiaire (10) reliée à une fibre optique (12) et étant monté sur la partie mobile (3) du banc (1) avec sa bride (14) tourné vers le jambage (28),
- l'équerre (9), sur la partie fixe (2), et le manchon (13), sur la partie mobile (3), étant alignés de manière que les axes de l'orifice (29) du jambage (28) et du manchon (13) soient confondus, l'extrémité de l'optique intermédiaire (10) passant librement jusque dans l'orifice (29) du jambage (28), l'optique intermédiaire (10) étant positionnée de manière à obtenir le couplage optimum,
- l'équerre (9), le manchon (13) et l'optique intermédiaire (10) étant ensuite rendus solidaires.

2. Appareillage comprenant:
- un banc de positionnement (1) se composant d'une partie fixe (2) et d'une partie mobile (3), la position de la partie mobile (2) du banc étant réglable selon trois axes de coordonnées rectangulaires OX, OY, OZ par rapport à la partie fixe (3) du banc, et
- un ensemble de moyens caractérisé en ce qu'il comprend:
- une double-équerre (46) composée d'une base épaisse (47) et de deux jambages parallèles (48, 49), la base (47) présentant en creux, entre les jambages (48 et 49), un logement (8) pour recevoir et loger une embase (7) portant le composant semi-conducteur actif (6), chaque jambage (48 ou 49) présentant un orifice (29) dont l'axe (OZ) passe par le centre optique du composant semi-conducteur actif (6), la base (47) étant montée sur la partie fixe (2) du banc (1), et
- deux manchons (13) respectivement pourvus à une de leurs extrémités de brides (14), l'axe d'un manchon (13) correspondant sensiblement à celui de l'orifice (29) du jambage (48 ou 49) associé et le diamètre interne d'un manchon étant inférieur à celui d'un orifice (29), chaque manchon (13) étant enfilé sur une optique intermédiaire (10) reliée à une fibre optique (12) et étant monté successivement sur la partie mobile (3) du banc (1) avec sa bride (14) tournée vers le jambage (48 ou 49) associé,
- la double-équerre (46), sur la partie fixe (2), et un manchon (13), sur la partie mobile (3), étant alignés de manière que les axes de l'orifice (29) du jambage (48 ou 49) et du manchon (13) concernés soient confondus, l'extrémité d'une optique intermédiaire (10) passant librement jusque dans le premier orifice, ladite optique intermédiaire (10) étant positionnée de manière à obtenir le couplage optimum, cette opération étant répétée avec l'autre optique intermédiaire (10),
- la double-équerre (46), les manchons (13) et les optiques intermédiaires étant rendus solidaires.

3. Appareillage suivant la revendication 1 ou 2, caractérisé en ce que chaque manchon (13) est percé d'un orifice (26) traversant la partie supérieure de sa paroi cylindrique et comporte, sous l'orifice (26), une rainure circulaire sur sa surface interne.

4. Appareillage suivant la revendication 1, 2 ou 3, caractérisé en ce que la bride (14) de chaque manchon (13) comporte une face supérieure (18) présentant un chanfrein (25) et une face externe (17), côté équerre, dans laquelle sont creusées une ou des rainures (22 à 24) communiquant avec le fond du chanfrein (25).

5. Appareillage suivant l'une des revendications 1 à 4, caractérisé en ce que, durant le réglage du couplage, puis l'assemblage des moyens, la face externe (17) de la bride (14) de chaque manchon (13) est appliquée contre la face externe du jambage (28) de l'équerre (9), ou d'un jambage (48 ou 49) de la double-équerre (46) par des doigts pousseurs (39) logés dans la partie mobile (3) du banc (1) et soumis à l'action de ressorts tarés (40).

6. Appareillage suivant l'une des revendications 1 à 5, caractérisé en ce que, après avoir réalisé le couplage optimum, l'optique intermédiaire (10) est fixée dans chaque manchon (13) par collage.

7. Appareillage suivant l'une des revendications 1 à 6, caractérisé en ce que la face externe (17) de la bride (14) de chaque manchon (13) est fixée à la face externe du jambage (28) de l'équerre (9), ou d'un jambage (48 ou 49) de la double-équerre (46) par collage.
